# FASCICULE DE BREVET EUROPEEN

(11) **EP 3 853 082 B1**
(45) Date de publication et mention de la délivrance du brevet: **09.08.2023**
(21) Numéro de dépôt: 19769492.0
(22) Date de dépôt: 18.09.2019
(51) Int. Cl.: B60S 1/08, G01N 21/3554

(54) **DISPOSITIF DE DÉTECTION DE NEIGE SUR UNE SURFACE VITRÉE D'UN VÉHICULE AUTOMOBILE**
VORRICHTUNG ZUR ERKENNUNG VON SCHNEE AUF EINER VERGLASTEN OBERFLÄCHE EINES KRAFTFAHRZEUGES
DEVICE FOR DETECTING SNOW ON A GLAZED SURFACE OF A MOTOR VEHICLE

(30) Priorité: 19.09.2018 FR 1858493
(43) Date de publication de la demande: 28.07.2021
(73) Titulaire: Valeo Systèmes d'Essuyage, 78322 Le Mesnil Saint Denis (FR)
(72) Inventeur: CHASSAING, Christophe, 63500 ISSOIRE (FR); GAUCHER, Vincent, 63500 ISSOIRE (FR); PESCHARD, David, 63500 ISSOIRE (FR); ASSUID, Patrick, 63500 ISSOIRE (FR); FRAYSSE, Aurélie, 63500 ISSOIRE (FR); THEBAULT, Denis, 63500 ISSOIRE (FR); DARSES, Franck, 63500 ISSOIRE (FR)
(74) Mandataire: Valeo Visibility
(86) Numéro de dépôt international: PCT/EP2019/074942
(87) Numéro de publication internationale: WO 2020/058303

(56) Documents cités:
- EP-A2- 2 557 414
- WO-A1-2017/162609
- FR-A1- 2 987 016
- FR-A1- 2 996 191
- US-A1- 2017 253 201
- US-B1- 10 053 059

## Description

L'invention se rapporte au domaine de l'essuyage et/ou du nettoyage des surfaces vitrées d'un véhicule automobile.

Le problème technique auquel la présente invention se propose d'apporter une solution est celui de la détection de neige sur une telle surface vitrée, afin de retirer cette neige avant qu'elle ne perturbe la visibilité du conducteur et/ou des passagers, notamment lorsque la surface vitrée considérée est le pare-brise, et/ou avant qu'elle ne perturbe le fonctionnement ou les performances de détecteurs ou d'éléments optiques du véhicule tels que, par exemple, des dispositifs d'éclairage et de signalisation de celui-ci.

Par ailleurs, un problème des chutes de neige est le risque d'accumulation de neige sur le pare-brise ou sur toute surface vitrée lorsque les chutes de neige ont lieu en l'absence du conducteur, par exemple la nuit. Lorsque le conducteur reprend place dans le véhicule, l'épaisseur de la couche de neige peut être telle que l'actionnement du moteur des systèmes d'essuie-glace est problématique et peut créer une surchauffe du moteur.

La présente invention s'inscrit dans ce contexte pour viser à résoudre un problème spécifique d'épaisseur de neige présente sur le pare-brise, en trouvant une alternative aux dispositifs de détection d'intempéries connus comme par exemple des dispositifs de détection de pluie par l'intermédiaire d'électrodes.

Pour atteindre son but, la présente invention a pour objet un dispositif de détection de neige sur une surface vitrée d'un véhicule automobile, caractérisé en ce qu'il comporte au moins un dispositif d'acquisition d'images configuré pour permettre une analyse spectrale en ondes courtes infrarouges de la lumière extérieure passant à travers la surface vitrée.

La présente invention s'applique à toute surface vitrée d'un véhicule automobile sur laquelle la présence de neige accumulée ou en cours d'accumulation peut gêner la visibilité du conducteur et/ou des passagers du véhicule, ou peut perturber le fonctionnement ou les performances d'un ou plusieurs détecteurs ou éléments optiques du véhicule tels que, par exemple, un ou plusieurs dispositifs d'éclairage ou de signalisation, ou des dispositifs optiques associés à des systèmes d'aide à la conduite tels que, par exemple, des systèmes d'aide au stationnement.

D'autres dispositifs de détection connus sont décrits dans les documents suivants : US2017253201 A1 et EP2557414 A2.

Le dispositif d'acquisition d'images est selon l'invention configuré pour capter des rayons dont la longueur d'onde est dans le domaine des ondes infrarouges courtes. Du fait du niveau de longueurs d'ondes très faibles, les ondes relatives au domaine du court infrarouge ont un comportement complètement différent des ondes relatives au domaine du moyen et du long infrarouge. Plus particulièrement, il convient de noter qu'un objet n'émet pas de chaleur dans le domaine des ondes infrarouge courtes, qui s'apparente plutôt au domaine du visible, la lumière ambiante étant naturellement émettrice dans le domaine des ondes infrarouges courtes.

Selon une caractéristique de l'invention, le dispositif de détection de présence de neige est configuré pour réaliser une mesure d'une valeur relative à la luminosité, cette valeur étant modifiée par la présence de neige entre la lumière extérieure au véhicule et le dispositif d'acquisition d'images.

On comprend que la présence de neige, lorsqu'elle se dépose finement sur le pare-brise, ne génère qu'une faible variation d'intensité lumineuse, et l'usage d'un dispositif d'acquisition d'image à ondes courtes infrarouges, ou SWIR pour l'acronyme anglais Short Wave Infra Red, permet de révéler un contraste fin, dès la présence des 1ers flocons, ce qui permet de déclencher le système d'essuyage au plus tôt, dans les conditions les plus favorables pour garantir sa meilleure performance.

On comprend qu'une caméra classique ne verrait une différence de luminosité, et donc une intensité lumineuse plus faible due à la présence de neige, que lorsque suffisamment de neige se serait déposée, le risque étant alors que lorsque le conducteur entre dans son véhicule, la quantité de neige soit trop importante et que l'actionnement des systèmes d'essuie-glace génère une surchauffe du moteur.

Selon l'invention, on se distingue ainsi de l'utilisation classique des caméras infrarouges à ondes moyennes (connu sous l'acronyme anglais MWIR, pour Medium Wave Infra Red) ou ondes longues (connu sous l'acronyme anglais LWIR, pour Long Wave Infra Red), plus particulièrement utilisées pour les applications vision de nuit.

Selon différentes caractéristiques de l'invention, la mesure de la luminosité par détection des ondes courtes infrarouges peut être effectuée à des intervalles de temps préalablement définis, et/ou elle peut être commandée par une unité de contrôle d'un tel véhicule dès lors qu'un paramètre représentatif de la météorologie, par exemple une température extérieure, franchit une valeur seuil préalablement définie.

Un déclenchement cyclique permet de s'assurer, à l'arrêt du véhicule lorsque le conducteur n'est pas présent, d'éviter l'amoncellement de neige sur le pare-brise, sans pour autant avoir un fonctionnement en continu, et donc énergivore, du dispositif de détection de présence de neige et de son dispositif d'acquisition d'images.

Selon une première série de caractéristiques de l'invention, prises seules ou en combinaison, on peut prévoir que :
- le dispositif d'acquisition d'images est une micro-caméra.
- le dispositif de détection comporte une unité centrale configurée pour d'une part calculer une valeur relative à la luminosité, pour d'autre part comparer cette valeur relative à la luminosité avec au moins une première valeur seuil prédéfinie et pour en outre commander une opération d'essuyage de la surface vitrée en fonction du résultat de cette comparaison. Dans un premier temps, le dispositif d'acquisition d'images et l'unité centrale sont configurés pour d'une part trier l'image acquise sur l'ensemble du spectre émis, afin de se débarrasser des ondes du domaine du visible et ne retenir que les ondes courtes infrarouges. L'unité centrale est configurée pour traiter ces valeurs d'ondes courtes infrarouges sur l'image détectée pour générer une commande du système d'essuyage de la surface vitrée.

- l'unité centrale est configurée pour mesurer une valeur de variation de la luminosité entre une première image et une deuxième image toutes les deux acquises par le dispositif d'acquisition d'images à un intervalle déterminé.
- la valeur seuil peut être définie expérimentalement, par exemple par étalonnage du dispositif de détection selon l'invention.
- l'unité centrale est configurée pour empêcher la mise en oeuvre ou stopper un ensemble d'essuyage du véhicule dès lors que la valeur de variation de la luminosité est supérieure à une deuxième valeur seuil, préalablement définie. Ceci permet, par exemple en cas de forte chute de neige, d'éviter tout endommagement de l'ensemble essuie-glace par surchauffe de son moteur d'entraînement.
- le dispositif d'acquisition d'images comporte des éléments optiques configurés pour détecter des rayons lumineux dans une plage de longueurs d'ondes comprises entre 0.75 et 3 micromètres. Plus particulièrement, les éléments optiques sont configurés pour détecter des rayons lumineux dans une plage de longueurs d'ondes comprises entre 1 et 2.7 micromètres.
- les éléments optiques comportent notamment un photodétecteur de type photodiode InGaAs, c'est-à-dire à base d'arséniure d'Indium-Gallium.

Telle qu'elle vient d'être décrite, l'invention permet de réaliser une détection fiable de la neige accumulée ou en cours d'accumulation sur une surface vitrée. L'invention atteint ainsi bien le but qu'elle s'était fixé.

L'invention s'étend également à un procédé de détection de neige sur une surface vitrée d'un véhicule automobile, comprenant au moins :
- une étape de mesure au cours de laquelle on réalise au moins une mesure d'une valeur de luminosité dans une plage spectrale comprise entre 0.75 et 3 micromètres, et plus particulièrement entre 1 et 2.7 micromètres,
- une étape de comparaison de ladite valeur mesurée de luminosité, ou d'une valeur de variation de luminosité calculée en fonction d'au moins cette mesure de valeur de luminosité, avec au moins une valeur seuil prédéfinie,
- une étape de commande d'une opération d'essuyage de la surface vitrée considérée en fonction du résultat de la comparaison faite à l'étape précédente.

Selon un exemple, une première valeur seuil et une deuxième valeur seuil peuvent être définies. La première valeur seuil est définie en liaison avec une quantité minimale de neige à partir de laquelle une opération d'essuyage de la surface vitrée est commandée, et la deuxième valeur seuil est définie en liaison avec une quantité maximale de neige au-delà de laquelle une opération d'essuyage de la surface vitrée considérée est stoppée et/ou n'est pas démarrée afin de ne pas endommager l'ensemble essuie-glace du véhicule. A titre d'exemple non limitatif, dans le cas où l'on compare aux valeurs seuils une variation de la luminosité entre deux images acquises, la première valeur seuil pourra être de l'ordre de 10% de baisse de luminosité entre la première image acquise et la deuxième image acquise, valeur représentative d'une couche de neige de l'ordre de 1 centimètre, et la deuxième valeur seuil pourra être de l'ordre de 50%, valeur représentative d'une couche de neige de l'ordre de 10 centimètres.

Il est à noter que l'opération d'essuyage de la surface vitrée commandée dans le cadre de l'étape de commande du procédé selon l'invention peut comprendre un ou plusieurs mouvements de va-et-vient consécutifs d'un balai d'essuyage sur la surface vitrée considérée.

Par ailleurs, selon une variante avantageuse, une opération d'essuyage peut être simultanément commandée sur la surface vitrée à travers laquelle les rayons lumineux passent pour être détectés par le dispositif d'acquisition d'images, ainsi que sur d'autres surfaces vitrées du véhicule, telles que par exemple des surfaces vitrées de dispositifs optiques d'éclairage et/ou de signalisation ou des dispositifs optiques d'aide à la conduite du véhicule considéré, qui ne sont pas équipées d'un dispositif d'acquisition d'images fonctionnant en ondes courtes infrarouges. De la sorte, on peut commander l'essuyage d'une pluralité de surfaces vitrées, de toute forme et présentant tout type de positionnement, avec uniquement un dispositif d'acquisition d'images fonctionnant en ondes courtes infrarouges et donc limiter ainsi les coûts de mise en oeuvre du dispositif.

Selon une variante avantageuse, le procédé selon l'invention comprend une étape préliminaire de mesure d'une température ambiante extérieure et de comparaison de cette température ambiante extérieure avec une valeur seuil préalablement définie. Une telle étape permet de réduire la dépense énergétique induite par le dispositif de détection et le procédé selon l'invention, en limitant l'utilisation du dispositif de détection et la mise en oeuvre du procédé selon l'invention aux circonstances dans lesquelles une chute de neige est envisageable d'un point de vue météorologique. A titre d'exemple non limitatif, la mise en oeuvre de l'étape de mesure du procédé selon l'invention, précédemment définie, pourra être conditionnée par une valeur de la température ambiante inférieure à quelques degrés Celsius, par exemple inférieure à 4 ou 5 degrés Celsius.

L'invention s'étend enfin à un véhicule automobile comprenant au moins un dispositif de détection de neige tel que décrit précédemment. L'invention s'étend également à un tel véhicule comportant une unité centrale configurée pour mettre en oeuvre un procédé tel que précédemment décrit.

Selon des caractéristiques de l'invention, la surface vitrée associée au dispositif d'acquisition d'images fonctionnant en ondes courtes est un pare-brise du véhicule. Et le dispositif d'acquisition d'images est disposé dans un angle du pare-brise, à l'intérieur du véhicule. En variante, le dispositif d'acquisition d'images peut être disposé dans un rétroviseur central du véhicule, tourné vers le pare-brise, ou dans toute autre configuration qui permet d'orienter l'optique du dispositif d'acquisition d'images vers la surface vitrée et plus particulièrement dans le cas décrit vers le pare-brise.

Selon une caractéristique de l'invention, le dispositif d'acquisition d'images est relié à une batterie du véhicule, de manière à être connectée en permanence.

Le véhicule peut comprendre d'autres surfaces vitrées respectivement associées à un dispositif d'essuyage qui leur est propre et les dispositifs d'essuyage des autres surfaces vitrées peuvent être commandés simultanément à la commande du dispositif d'essuyage associé au pare-brise. On assure ainsi l'essuyage de l'ensemble des surfaces vitrées avec un système de détection centralisé.

L'invention est notamment particulièrement avantageuse dans le cas d'application à un véhicule autonome, la rapidité de la détection des flocons grâce au dispositif d'acquisition d'images en ondes courtes infrarouges permettant de garantir une détection d'images sans défaillance et un déclenchement rapide de l'essuyage des surfaces vitrées, notamment en cours de roulage du véhicule afin que les capteurs permettant l'assistance de conduite autonome aient une visibilité optimale.

D'autres caractéristiques, détails et avantages de l'invention apparaitront plus clairement à l'aide de la description qui suit et des dessins parmi lesquels :
- la figure 1 est une vue schématique générale d'un véhicule automobile équipé d'un dispositif de détection de neige selon l'invention, dans lequel un dispositif d'acquisition d'images est agencé dans le coin d'un pare-brise du véhicule,
- la figure 2 est une vue schématique du dispositif d'acquisition d'images agencé dans le montant de baie dans le coin du pare-brise du véhicule, vu depuis l'intérieur de celui-ci,
- la figure 3 est une vue schématique des différents composants du dispositif de détection selon l'invention, avec un pare-brise de véhicule vu depuis l'intérieur du véhicule, et
- la figure 4 est une vue schématique des différentes étapes d'un procédé selon l'invention.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par le même repère.

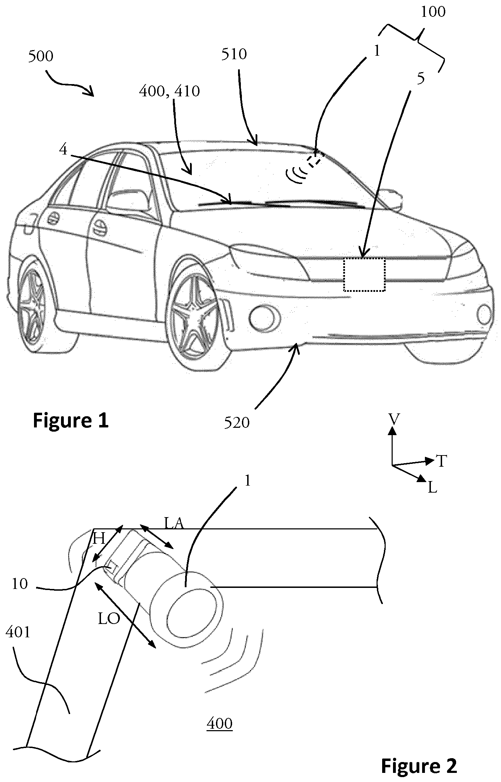

La figure 1 est une vue générale en perspective d'un véhicule automobile 500 équipé d'un dispositif de détection de neige 100 selon l'invention. En référence à cette figure, on définit un trièdre (L, T, V) représentant les directions, respectivement, longitudinale L, transversale T, et verticale V, du véhicule. En référence à ces différentes directions, le terme "haut" désigne les parties du véhicule 500 situées les plus proches du toit 510 de ce dernier selon la direction verticale V précédemment définie, et le terme "bas" désigne les parties du véhicule 500 situées les plus proches d'un châssis 520 de ce dernier selon la direction verticale V précitée. En d'autres termes, la dénomination "bas" désigne les éléments du véhicule 500 situées les plus proches du sol sur lequel ledit véhicule 500 est placé, et la dénomination "haut" désigne les éléments du véhicule 500 les plus éloignées du sol sur lequel ledit véhicule 500 est placé.

Le dispositif de détection de neige 100 comprend un dispositif d'acquisition d'images 1 configuré pour détecter des rayons lumineux émis dans une longueur d'onde spécifique, dans le domaine des ondes courtes infrarouges.

Selon l'exemple de réalisation particulièrement avantageux, mais non exclusif, illustré par les figures 1 à 3, le dispositif d'acquisition d'images est agencé dans un coin haut du pare-brise 400, c'est-à-dire un coin proche du toit 510, et le dispositif d'acquisition est orienté vers le centre du pare-brise.

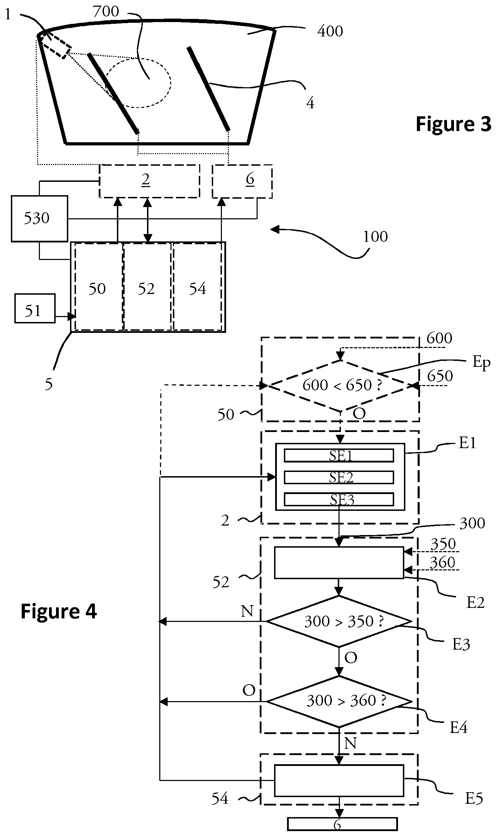

Il convient de noter que l'illustration des figures 1 et 3 montrent un dispositif d'acquisition d'images agencé dans le coin supérieur du pare-brise du côté du conducteur, mais que ce dispositif pourrait être, sans sortir du contexte de l'invention, disposé dans un autre coin du pare-brise. L'agencement dans un coin supérieur est particulièrement intéressant en ce qu'il permet de positionner le dispositif d'acquisition d'images en dehors du champ de vision du conducteur, et il est par ailleurs avantageux que ce dispositif soit situé du côté du conducteur pour réaliser préférentiellement la détection de présence de neige dans une zone du pare-brise 700 disposée devant le conducteur.

Quel que soit le mode de réalisation, le dispositif d'acquisition d'images 1 est situé à l'intérieur du véhicule, dans l'habitacle de celui-ci, et il est configuré pour capter une image de tout ou partie du pare-brise. Le dispositif d'acquisition d'images 1 est configuré pour réaliser une analyse spectrale en ondes courtes infrarouges de la lumière extérieure passant à travers la surface vitrée, c'est-à-dire pour détecter plus particulièrement les rayons lumineux traversant dans une gamme d'ondes courtes infrarouges comprises entre 0.75 et 3 micromètres.

Le dispositif d'acquisition d'images intègre, ou bien est associé à, une unité de traitement d'images 2 apte à mesurer une valeur relative à la luminosité 300 des rayons traversant le pare-brise sur la base de cette analyse spectrale.

Selon un premier mode de réalisation de l'invention, la valeur relative à la luminosité 300 est une valeur instantanée de luminosité à un instant T et le dispositif de détection de l'invention est configurée pour tirer un enseignement sur la présence de neige sur la surface vitrée en comparant cette valeur instantanée à un instant T à une valeur de référence que devrait avoir théoriquement la luminosité à cet instant T.

Selon un deuxième mode de réalisation de l'invention, la valeur relative à la luminosité 300 est une valeur de variation de luminosité entre deux images acquises à un intervalle de temps prédéfini, la modification de la luminosité dans la deuxième image par rapport à la première image précédemment acquise pouvant témoigner de la présence de neige si la luminosité a baissé dans les ondes courtes infrarouges qui font la base de la détection selon l'invention.

A titre d'exemples non limitatifs, par rapport à une luminosité standard détectée par le dispositif d'acquisition d'images, la variation de luminosité lorsqu'une couche de neige d'environ un centimètre d'épaisseur est présente sur la surface extérieure 410 du pare-brise 400 est une baisse de luminosité de l'ordre de 10%, et cette variation de luminosité lorsqu'une couche de neige d'environ dix centimètres d'épaisseur est présente sur la surface extérieure 410 du pare-brise 400 est une baisse de luminosité de l'ordre de 50%.

Le dispositif d'acquisition d'images 1 peut notamment prendre la forme d'une micro-caméra apte à être logée dans la structure du véhicule entourant la surface vitrée 400 et plus particulièrement le pare-brise. Dans l'exemple illustré, et notamment sur la figure 2, le dispositif d'acquisition d'images 1 a été grossi par rapport au montant de baie 401 dans lequel il est intégré, pour le rendre plus particulièrement visible. On pourrait envisager sans sortir du contexte de l'invention, notamment dans le cas du premier mode de réalisation précédemment décrit, que le dispositif d'acquisition d'images comporte, au lieu d'une caméra, un appareil photo équipé d'une photodiode appropriée pour traiter les ondes courtes infrarouges.

Le dispositif d'acquisition d'images est ici une micro-caméra SWIR, c'est à dire une micro-caméra comportant des éléments optiques configurés pour détecter des rayons lumineux dans une plage de longueurs d'ondes correspondant aux ondes courtes infrarouges.

La micro-caméra SWIR peut comporter un photodétecteur de type photodiode InGaAs, c'est-à-dire à base d'arséniure d'Indium-Gallium, de manière à détecter des rayons lumineux dans une plage de longueur d'ondes comprises entre 0.75 et 3 micromètres, et plus particulièrement comprises entre 1 et 2.7 micromètres.

La micro-caméra SWIR peut notamment présenter des dimensions de l'ordre de 20 à 40mm et par exemple présenter une longueur L, une hauteur H et une largeur 1 de l'ordre de 30mm.

Par ailleurs, la micro-caméra SWIR peut comporter des moyens de communication 10, configurés pour au moins émettre et transmettre des données en direction de l'unité de traitement d'images 2, ici dans une configuration sans fil.

La figure 3 illustre plus particulièrement les moyens mis en oeuvre pour commander et pour communiquer avec le dispositif d'acquisition d'images 1 du dispositif de détection.

Selon l'invention, le dispositif de détection 100 comprend, outre le dispositif d'acquisition d'images 1 et l'unité de traitement d'images 2, une unité centrale 5 comprenant au moins un module de pilotage 50 du dispositif d'acquisition 1, un module de calcul 52 pour récupérer les informations de valeurs relatives à la luminosité 300 des images acquises et pour en déduire une donnée à comparer à au moins une valeur seuil afin de récupérer une information sur la présence de neige, et un module de commande 54 pour générer une instruction de commande pour un système d'essuyage.

Le module de pilotage 50 est configuré pour déterminer si ces conditions de mise en oeuvre du dispositif d'acquisition d'images 1 sont respectées, afin notamment d'éviter que des mesures soient réalisées alors qu'il est certain que la surface vitrée n'est pas recouverte de neige. A titre d'exemple non limitatif, le module de pilotage reçoit une information de température extérieure mesurée par un capteur de température 51 du véhicule. Une telle configuration permet, notamment, de réduire la dépense énergétique du dispositif de détection 100, en stoppant le fonctionnement du dispositif de détection lors de conditions météorologiques dans lesquelles une chute de neige est exclue.

Le module de calcul 52 est configuré pour d'une part récupérer, par des moyens de communication appropriés, filaires ou sans fil selon les variantes, au moins une valeur relative à la luminosité 300, déterminée par le dispositif d'acquisition d'images 1 et l'unité de traitement d'images 2 correspondant, et pour d'autre part utiliser cette valeur dans une comparaison avec au moins une première valeur seuil 350 prédéfinie, tel que cela est illustré par le schéma de procédé de fonctionnement de la figure 4.

Par exemple, la première valeur seuil 350 peut être définie comme étant la valeur de luminosité de l'air ambiant lorsqu'une couche de neige de l'ordre de quelques millimètres à un centimètre est présente sur la surface extérieure 410 du pare-brise 400.

Alternativement, la première valeur seuil 350 peut être définie comme étant la valeur de la variation de luminosité pour une épaisseur minimale de neige sur le pare-brise 400 ou, plus généralement, sur une surface vitrée du véhicule 500, épaisseur minimale au-delà de laquelle la présence de neige sur la surface vitrée 400 précitée peut altérer une visibilité pour le conducteur et/ou pour les passagers du véhicule 500, ou peut altérer le fonctionnement ou les performances d'un élément optique présentant une surface vitrée 400 telle que précitée.

De manière alternative ou cumulative, le module de calcul 52 peut récupérer ou bien être implémenté avec une deuxième valeur seuil 360, préalablement définie, et ce module de calcul est configuré pour comparer la valeur instantanée de luminosité, ou bien la valeur de variation de luminosité telle que précédemment définie, avec cette deuxième valeur seuil 360. Avantageusement, la deuxième valeur seuil 360 est définie comme étant la valeur instantanée de luminosité ou la valeur de variation de luminosité correspondant à une épaisseur maximale de neige sur le pare-brise 400 ou, plus généralement, sur une surface vitrée 400 du véhicule 500, épaisseur maximale au-delà de laquelle une opération d'essuyage, par un ou plusieurs balais d'essuie-glace 4, de la neige présente sur la surface vitrée 400, pourrait endommager le système d'entraînement du ou des balais d'essuie-glace 4, par exemple par surchauffe du moteur d'entraînement 6 de tels balais. Par exemple, la deuxième valeur seuil 360 peut être définie comme étant la valeur instantanée de luminosité ou bien la valeur de variation de luminosité lorsqu'une couche de neige d'environ dix centimètres d'épaisseur est présente sur la surface vitrée 400. A titre d'exemple, la deuxième valeur seuil 360 correspond à une baisse de 50% de la luminosité par rapport à une luminosité standard détectée par le dispositif d'acquisition d'images lorsqu'il n'y a pas de neige. Le dépassement de cette deuxième valeur seuil, par exemple si la valeur de variation de luminosité est de l'ordre de 60%, est révélateur de la présence d'une couche de neige supérieure à dix centimètres, dans l'exemple donné précédemment.

Le module de commande 54 est configuré pour générer une instruction de commande des balais d'essuie-glace 4 en fonction du résultat des comparaisons de la valeur instantanée de luminosité, ou de variation de luminosité, par rapport aux différent seuils choisis. Un premier niveau de commande résulte dans l'actionnement ou l'arrêt du système d'essuyage, c'est-à-dire du ou des moteurs d'entraînement 6 des balais d'essuie-glace 4 selon l'absence de neige ou la quantité de neige détectée. Un deuxième niveau de commande peut consister en la modulation dans le temps de l'instruction de commande, par exemple la détermination du nombre de mouvements successifs de va-et-vient angulaire d'un ou plusieurs balais d'essuie-glace 4 sur la surface extérieure 410 du pare-brise 400 en fonction de l'épaisseur de neige, étant entendu que le module de calcul et le module de commande peuvent faire corréler la valeur mesurée avec une épaisseur de neige estimative.

Aussi bien le dispositif d'acquisition d'images, le moteur d'entraînement 6 que l'unité centrale 5 peuvent être alimentés électriquement par une batterie 530 du véhicule 500, de telle sorte que le système de détection selon l'invention est susceptible de fonctionner à l'arrêt du véhicule. Une telle configuration permet également, par exemple, de déclencher une détection de neige alors que le véhicule n'est pas occupé, par exemple avant utilisation du véhicule le matin. Dans ce cas, le module de pilotage 50 peut être configuré pour lancer l'allumage, si les conditions de température sont respectées, à une ou plusieurs heures prédéfinies par un utilisateur, préalablement à l'utilisation du véhicule. Ceci présente un intérêt particulier par exemple pour des véhicules situés dans des régions dans lesquelles des chutes de neige peuvent fréquemment se produire pendant la nuit. Dans ce cas, notamment en paramétrant le module de pilotage pour qu'il procède à une telle mise en oeuvre de l'organe de mesure à des intervalles de temps de quelques heures, le dispositif de détection 100 selon l'invention et le procédé associé permettent d'éviter une accumulation trop importante de neige sur une ou plusieurs surfaces vitrées 400 du véhicule pendant la nuit, réduisant ainsi, pour l'utilisateur, la durée d'un éventuel déneigement avant utilisation du véhicule.

La figure 4 présente schématiquement les différentes étapes d'un exemple de procédé selon l'invention. Tel que cela va être compris, le procédé est ici décrit en relation avec l'application du deuxième mode de réalisation du dispositif de détection dans lequel le dispositif d'acquisition d'images et l'unité de traitement d'images associée sont configurés pour mesurer une valeur relative à la variation de la luminosité sur une plage de temps donnée. Bien entendu, un procédé équivalent pourra être mis en oeuvre, sans sortir du contexte de l'invention, dès lors que la valeur relative à la luminosité est une valeur instantanée à comparer à une valeur de référence.

Comme il a été précédemment décrit, le procédé selon l'invention comprend une première étape E1 lors de laquelle, dans une première sous-étape SE1, le dispositif d'acquisition d'images 1 du dispositif de détection 100, tel que précédemment décrit et illustré, réalise la capture d'une première image, le cas échéant une séquence vidéo de durée définie, de la surface vitrée à côté de laquelle est situé le dispositif d'acquisition d'images 1, et lors de laquelle, après un intervalle de temps déterminé, dans une deuxième sous-étape SE2, le dispositif d'acquisition d'images 1 réalise la capture d'une deuxième image, le cas échéant une autre séquence vidéo de même durée définie, de la même surface vitrée.

Dans une troisième sous-étape SE3, l'unité de traitement d'images 2 associée au dispositif d'acquisition d'images 1 réalise une mesure de variation de luminosité 300 entre les deux images acquises.

Lors d'une deuxième étape E2 du procédé selon l'invention, la valeur relative à la luminosité 300, c'est-à-dire ici la valeur de la variation de luminosité, résultante de la mesure réalisée par l'unité de traitement d'images 2 est récupérée par le module de calcul 52, et ce module de calcul récupère en outre la première valeur seuil 350 et la deuxième valeur seuil 360.

Lors d'une troisième étape E3 du procédé selon l'invention, le module de calcul 52 compare la valeur de la variation de luminosité acquise au préalable à la première valeur seuil 350. Si le résultat de la comparaison est tel que la valeur de la variation de luminosité acquise est inférieure à la première valeur seuil (300 < 350), alors aucune action n'est effectuée et la boucle prend fin, en repartant vers une étape de mesure.

Si le résultat de la comparaison est tel que la valeur de la variation de luminosité acquise est supérieure à la première valeur seuil (300 > 350), il est déterminé que la quantité de neige est suffisante pour gêner la visibilité du conducteur ou gêner la détection des capteurs derrière la surface vitrée et que le procédé doit passer à l'étape suivante.

Lors d'une quatrième étape E4, facultative mais qui présente les avantages précédemment décrits, la valeur de la variation de luminosité préalablement acquise est comparée à la deuxième valeur seuil 360, afin de déterminer si la quantité de neige n'est pas trop importante pour autoriser une opération d'essuyage par le système d'essuyage sans risque de surchauffe du système. Si le résultat de la comparaison est tel que la valeur relative à la luminosité 300 acquise, c'est à dire la valeur de la variation de luminosité, est inférieure à la deuxième valeur seuil (300 < 360), alors le module de commande est mis en oeuvre dans une cinquième étape E5 pour générer une instruction de commande du système d'essuyage du véhicule. Simultanément, le procédé peut être relancé pour déterminer si la couche de neige restant après l'opération d'essuyage doit être considérée ou non. Par ailleurs, dans la quatrième étape, si le résultat de la comparaison est tel que la valeur de la variation de luminosité préalablement acquise est supérieure à la deuxième valeur seuil (300 > 360), alors aucune action n'est effectuée et la boucle prend fin, en repartant vers une étape de mesure.

Le procédé peut être réalisé en boucle pendant une période déterminée ou à la fin d'un nombre de cycles déterminé. Il peut aussi être décidé en variante de terminer le procédé dès lors qu'une opération d'essuyage est commandée par le module de commande 52.

Dans l'exemple illustré sur la figure 4, il a été envisagé une étape préliminaire Ep réalisée avant la première étape E1 précédemment décrite. L'étape préliminaire est mise en oeuvre par le module de pilotage 50 et consiste en la récupération d'une information de température extérieure 600, le cas échéant en la commande d'une mesure de température extérieure par un dispositif de mesure du véhicule. Le module de pilotage 50 est configuré pour comparer, lors de cette étape préliminaire Ep, la valeur mesurée de la température 600 avec une troisième valeur seuil 650 préalablement définie et pour, en fonction du résultat de cette comparaison, commander ou non la réalisation de la première étape E1 précédemment décrite. Selon un exemple, la première étape E1 du procédé selon l'invention sera commandée dès lors que la température extérieure 600 est inférieure à une valeur seuil 650 de l'ordre de quelques degrés Celsius, par exemple 4 à 5 degrés Celsius.

L'invention, telle qu'elle vient d'être décrite et illustrée, permet de réaliser une détection efficace et fiable de la présence de neige en cours d'accumulation ou déjà accumulée sur une ou plusieurs surfaces vitrées d'un véhicule automobile. Notamment, l'invention offre la possibilité d'une détection lorsque le véhicule n'est pas en cours d'utilisation, permettant ainsi de réduire d'éventuelles durées de déneigement d'une ou plusieurs surfaces vitrées du véhicule avant utilisation de ce dernier.

En particulier, si l'invention a été ici décrite et illustrée préférentiellement dans son application à un pare-brise d'un véhicule, elle s'applique à toute surface vitrée d'un tel véhicule, notamment à des surfaces vitrées et/ou à des lentilles de dispositifs optiques d'aide à la conduite et/ou d'aide au stationnement tels que, à titre d'exemples non limitatifs, des caméras de recul, des systèmes d'éclairage et/ou de signalisation, etc ...

## Revendications

1. Dispositif (100) de détection de neige sur une surface vitrée (400) d'un véhicule automobile (500), **caractérisé en ce qu'**il comporte :
- au moins un dispositif d'acquisition d'images (1) configuré pour permettre une analyse spectrale en ondes courtes infrarouges de la lumière extérieure passant à travers la surface vitrée (400),
- une unité centrale (5) configurée pour d'une part calculer une valeur relative à la luminosité (300) dans une ou plusieurs image(s) acquise(s) par le dispositif d'acquisition d'image (1) et pour comparer cette valeur avec au moins une première valeur seuil (350) prédéfinie et pour d'autre part commander une opération d'essuyage de la surface vitrée (400) en fonction du résultat de cette comparaison.

2. Dispositif (100) de détection de neige selon la revendication précédente, **caractérisé en ce que** le dispositif d'acquisition d'images (1) est une micro-caméra.

3. Dispositif (100) de détection de neige selon l'une des revendications précédentes, **caractérisé en ce que** le dispositif d'acquisition d'images (1) comporte des éléments optiques configurés pour détecter des rayons lumineux dans une plage de longueurs d'ondes comprises entre 0.75 et 3 micromètres.

4. Procédé de détection de neige sur une surface vitrée (400) d'un véhicule automobile, comprenant au moins :
- une étape de mesure au cours de laquelle on réalise au moins une mesure d'une valeur relative à la luminosité (300) dans une plage spectrale comprise entre 0.75 et 3 micromètres,
- une étape de comparaison de la valeur instantanée de luminosité mesurée, ou d'une valeur de variation de luminosité calculée en fonction d'au moins cette mesure de valeur relative à la luminosité (300), avec au moins une valeur seuil prédéfinie (350, 360),
- une étape de commande d'une opération d'essuyage de la surface vitrée (400) en fonction du résultat de la comparaison faite à l'étape précédente.

5. Procédé selon la revendication précédente, **caractérisé en ce qu'**il comprend une étape préliminaire de mesure d'une température ambiante extérieure (600).

6. Véhicule automobile (500) comprenant au moins un dispositif de détection de neige (100) selon l'une quelconque des revendications 1 à 3.

7. Véhicule (500) selon la revendication précédente, la surface vitrée étant un pare-brise, **caractérisé en ce que** le dispositif d'acquisition d'images est disposé dans un angle du pare-brise, à l'intérieur du véhicule.

8. Véhicule (500) selon la revendication 6, la surface vitrée étant un pare-brise, **caractérisé en ce que** le dispositif d'acquisition d'images est disposé dans un rétroviseur central du véhicule, tourné vers le pare-brise.

9. Véhicule (500) selon l'une des revendications 6 à 8, **caractérisé en ce que** le dispositif d'acquisition d'images est relié à une batterie du véhicule, de manière à être connectée en permanence.

## Patentansprüche

1. Vorrichtung (100) zur Erkennung von Schnee auf einer Glasfläche (400) eines Kraftfahrzeugs (500), **dadurch gekennzeichnet, dass** sie Folgendes aufweist:
- wenigstens eine Bilderfassungsvorrichtung (1), die dazu ausgebildet ist, eine Infrarot-Kurzwellen-Spektralanalyse des Außenlichts zu ermöglichen, das durch die Glasfläche (400) hindurchtritt,
- eine Zentraleinheit (5), die dazu ausgebildet ist, einerseits einen Wert in Bezug auf die Helligkeit (300) in einem oder mehreren von der Bilderfassungsvorrichtung (1) erfassten Bild(ern) zu berechnen und diesen Wert mit wenigstens einem ersten vorgegebenen Schwellenwert (350) zu vergleichen und andererseits einen Vorgang des Wischens der Glasfläche (400) in Abhängigkeit vom Ergebnis dieses Vergleichs zu steuern.

2. Schneeerkennungsvorrichtung (100) nach dem vorhergehenden Anspruch, **dadurch gekennzeichnet, dass** die Bilderfassungsvorrichtung (1) eine Mikrokamera ist.

3. Schneeerkennungsvorrichtung (100) nach einem der vorhergehenden Ansprüche, **dadurch gekennzeichnet, dass** die Bilderfassungsvorrichtung (1) optische Elemente aufweist, die dazu ausgebildet sind, Lichtstrahlen in einem Wellenlängenbereich zwischen 0.75 und 3 Mikrometern zu erfassen.

4. Verfahren zur Erkennung von Schnee auf einer Glasfläche (400) eines Kraftfahrzeugs, umfassend wenigstens:
- einen Schritt des Messens, in dessen Verlauf wenigstens eine Messung eines Werts in Bezug auf die Helligkeit (300) in einem Spektralbereich zwischen 0.75 und 3 Mikrometern vorgenommen wird,
- einen Schritt des Vergleichens des gemessenen momentanen Helligkeitswerts oder eines Helligkeits-Variationswerts, der in Abhängigkeit von wenigstens dieser Wertmessung in Bezug auf die Helligkeit (300) berechnet wird, mit wenigstens einem vorgegebenen Schwellenwert (350, 360),
- einen Schritt des Steuerns eines Vorgangs des Wischens der Glasfläche (400) in Abhängigkeit vom Ergebnis des beim vorhergehenden Schritt durchgeführten Vergleichs.

5. Verfahren nach dem vorhergehenden Anspruch, **dadurch gekennzeichnet, dass** es einen vorangehenden Schritt des Messens einer äußeren Umgebungstemperatur (600) umfasst.

6. Kraftfahrzeug (500) umfassend mindestens eine Schneeerkennungsvorrichtung (100) nach einem der Ansprüche 1 bis 3.

7. Fahrzeug (500) nach dem vorhergehenden Anspruch, wobei die Glasfläche eine Windschutzscheibe ist, **dadurch gekennzeichnet, dass** die Bilderfassungsvorrichtung in einer Ecke der Windschutzscheibe im Inneren des Fahrzeugs angeordnet ist.

8. Fahrzeug (500) nach Anspruch 6, wobei die Glasfläche eine Windschutzscheibe ist, **dadurch gekennzeichnet, dass** die Bilderfassungsvorrichtung in einem mittigen Rückspiegel des Fahrzeugs der Windschutzscheibe zugewandt angeordnet ist.

9. Fahrzeug (500) nach einem der Ansprüche 6 bis 8, **dadurch gekennzeichnet, dass** die Bilderfassungsvorrichtung mit einer Batterie des Fahrzeugs verbunden ist, so dass sie dauerhaft angeschlossen ist.

## Claims

1. Device (100) for detecting snow on a glazed surface (400) of a motor vehicle (500), **characterized in that** it comprises:
- at least one image acquisition device (1) configured to make it possible to spectrally analyse, in the shortwave infrared, the outside light passing through the glazed surface (400),
- a central unit (5) configured to, on the one hand, calculate a value relating to luminosity (300) in one or more images acquired by the image acquisition device (1) and to compare this value with at least one predefined first threshold value (350) and to, on the other hand, command an operation of wiping the glazed surface (400) depending on the result of this comparison.

2. Device (100) for detecting snow according to the preceding claim, **characterized in that** the image acquisition device (1) is a microcamera.

3. Device (100) for detecting snow according to one of the preceding claims, **characterized in that** the image acquisition device (1) comprises optical elements configured to detect light rays in a range of wavelengths of between 0.75 and 3 micrometres.

4. Method for detecting snow on a glazed surface (400) of a motor vehicle, comprising at least:
- one measurement step during which there is taken at least one measurement of a value relating to luminosity (300) in a spectral range of between 0.75 and 3 micrometres,
- one step of comparing the instantaneous measured luminosity value, or a luminosity variation value calculated depending on at least this measurement of a value relating to luminosity (300), with at least one predefined threshold value (350, 360),
- one step of commanding an operation of wiping the glazed surface (400) depending on the result of the comparison made in the preceding step.

5. Method according to the preceding claim, **characterized in that** it comprises a preliminary step of measuring an outside ambient temperature (600).

6. Motor vehicle (500) comprising at least one device (100) for detecting snow according to any one of Claims 1 to 3.

7. Vehicle (500) according to the preceding claim, the glazed surface being a windscreen, **characterized in that** the image acquisition device is arranged in a corner of the windscreen, inside the vehicle.

8. Vehicle (500) according to Claim 6, the glazed surface being a windscreen, **characterized in that** the image acquisition device is arranged in a central rear-view mirror of the vehicle, turned towards the windscreen.

9. Vehicle (500) according to one of Claims 6 to 8, **characterized in that** the image acquisition device is connected to a battery of the vehicle, so as to be permanently connected.
